# EUROPÄISCHE PATENTSCHRIFT

(11) **EP 3 924 217 B1**
(45) Veröffentlichungstag und Bekanntmachung des Hinweises auf die Patenterteilung: **27.09.2023**
(21) Anmeldenummer: 20705050.1
(22) Anmeldetag: 12.02.2020
(51) Int. Cl.: B60N 2/22, B60N 2/36

(54) **VERRIEGELUNGSVORRICHTUNG UND FAHRZEUGSITZ**
LOCKING DEVICE AND VEHICLE SEAT
DISPOSITIF DE VERROUILLAGE ET SIÈGE DE VÉHICULE

(30) Priorität: 12.02.2019 DE 102019103475
(43) Veröffentlichungstag der Anmeldung: 22.12.2021
(73) Patentinhaber: KEIPER Seating Mechanisms Co., Ltd., Shanghai 201315 (CN)
(72) Erfinder: MUELLER, Peter, 67686 Mackenbach (DE); WINDECKER, Volker, 67729 Sippersfeld (DE); ULLMERT, Erik, 66877 Ramstein-Miesenbach (DE)
(74) Vertreter: Kutzenberger Wolff & Partner
(86) Internationale Anmeldenummer: PCT/EP2020/053520
(87) Internationale Veröffentlichungsnummer: WO 2020/165198

(56) Entgegenhaltungen:
- WO-A1-2015/036360
- DE-A1- 10 354 161
- DE-A1- 19 928 507

## Beschreibung

Die Erfindung betrifft eine Verriegelungsvorrichtung, mit einem mittels eines Bedienelements zwischen einer Verriegelungsstellung und einer Entriegelungsstellung verschwenkbaren Fangexzenter und mit einer zwischen einer geöffneten Stellung und einer geschlossenen Stellung verschwenkbaren Rastklinke, wobei die Rastklinke in deren geschlossener Stellung durch den Fangexzenter in dessen Verriegelungsstellung gesperrt ist, wobei die Rastklinke wenigstens zwei Aufnahmen aufweist und in der geschlossenen Stellung der Rastklinke ein Verriegelungsglied in wahlweise einer der Aufnahmen aufnehmbar ist. Die Erfindung betrifft ferner einen Fahrzeugsitz.

### Stand der Technik

Aus dem Stand der Technik sind allgemein Verriegelungsvorrichtungen zur Verriegelung einer relativ zu einer Sitzfläche klappbaren Lehne eines Fahrzeugsitzes an einer Fahrzeugstruktur bekannt. Derartige Verriegelungsvorrichtungen umfassen ein Bedienelement, mittels welchem ein an der Fahrzeugstruktur oder der Lehne befestigtes Drehfallenschloss, das mit einem korrespondierenden, an der Lehne oder der Fahrzeugstruktur befestigten, Verriegelungsglied verriegelbar ist, entriegelt werden kann.

Aus der DE 10 2007 016 409 A1 ist eine Verriegelungsvorrichtung für einen Fahrzeugsitz bekannt, welche in einem verriegelten Zustand mit einem Verriegelungsglied zusammenwirkt. Die Verriegelungsvorrichtung umfasst eine um einen ersten Lagerbolzen schwenkbar gelagerte Klinke, welche eine Aufnahme für das Verriegelungsglied sowie eine Funktionsfläche aufweist, ein um einen zweiten Lagerbolzen schwenkbar gelagertes Fangelement und einen um den zweiten Lagerbolzen schwenkbar gelagerten Spannexzenter, welcher im verriegelten Zustand der Verriegelungsvorrichtung mit der Funktionsfläche zusammenwirkt, um den verriegelten Zustand der Verriegelungsvorrichtung zu sichern. Eine solche Verriegelungsvorrichtung wird auch als Drehfallenschloss oder kurz Drehfalle bezeichnet. Für einen Entriegelungsvorgang der Verriegelungsvorrichtung wird erst das Fangelement von der Funktionsfläche der Klinke weggeschwenkt. Der Spannexzenter wird dann vom Fangelement oder einem Betätigungselement des Fangelements mitgenommen und dadurch ebenfalls von der Funktionsfläche der Klinke weggeschwenkt. Die Klinke öffnet aufgrund einer Federvorspannung und gibt das Verriegelungsglied frei.

Aus der DE 199 28 507 A1 ist ein Drehfallenverschluss bekannt, mit einer mittels einer Sperrklinke in einer Verriegelungsstellung gegen Rückdrehen gesicherten Drehfalle mit einer ersten und einer davon in Drehrichtung beabstandeten zweiten Gabelöffnung, wobei die erste Gabelöffnung in der durch Freigeben der Sperrklinke erreichbaren Öffnungsstellung eine Einfangstellung einnimmt für ein Gegenschließteil.

Aus der JP 2006 199 131 A ist eine Verriegelungsvorrichtung zum Verriegeln und Entriegeln einer Sitzlehne in einem Fahrzeug bekannt, aufweisend einen an einer Karosserie des Fahrzeugs montierten Schließbügel, wobei der Schließbügel einen ersten Eingriffsabschnitt an einem ersten Ende des Schließbügels und einen zweiten Eingriffsabschnitt an einem zweiten Ende des Schließbügels aufweist, ferner aufweisend einen Verriegelungsmechanismus, der in der Sitzlehne angebracht ist und eine Klinke aufweist, die mit dem Schließbügel in Eingriff bringbar ist, um zu ermöglichen, dass die Sitzlehne in einer stehenden Position gehalten wird, wobei die Klinke eine erste Eingriffsnut und eine zweite Eingriffsnut aufweist, wobei jeweils der erste und der zweite Eingriffsabschnitt des Schließbügels in jeweils eine der ersten Eingriffsnut oder der zweiten Eingriffsnut der Klinke eingreifen kann, um zu ermöglichen, dass die Sitzlehne in der stehenden Position gehalten wird, wobei der Verriegelungsmechanismus ferner eine Erfassungseinheit zur Erfassung eines unvollständigen Ein- und Ausrückens des Schließbügels umfasst.

Aus der EP 0 952 288 A1 ist ein Verriegelungsvorrichtung bekannt, aufweisend ein Gehäuse, eine an dem Gehäuse in einer Konstruktionseinheit befestigte Abdeckplatte, eine Klinkenplatte zum Verriegeln des Schlagbolzens und eine Verriegelungsplatte, wobei die Klinkenplatte und die Verriegelungsplatte jeweils mittels des Gehäuses und der Abdeckplatte drehbar gelagert sind, wobei die Verriegelungsplatte die Klinkenplatte bei ihrer Drehung verriegelt, um ein Verriegeln des Schlagbolzens durch die Klinkenplatte sicherzustellen,ferner aufweisend ein Entriegelungsmittel, um das Verriegeln des Schlagbolzens durch die Klinkenplatte durch Drehen der Verriegelungsplatte aufzuheben.

Aus der DE 103 54 161 A1 ist eine Vorrichtung zur Verriegelung einer Fahrzeuglehne in wenigstens zwei unterschiedlichen Lehnenpositionen bekannt, umfassend eine Drehfalle mit einem ersten und wenigstens einem zweiten Gabelmaul zur Bereitstellung einer ersten und wenigstens einer zweiten Arretierposition für ein Schließteil, insbesondere für einen Schließbolzen, sowie einen in die Bewegungsbahn des Schließteils hineinragenden Fanghebel, der durch das Schließteil betätigbar ist und bei Betätigung ein Einfallen der Drehfalle in ihre Sperrstellung ermöglicht, wobei eine Halteklinke zur Sicherung der Drehfalle in ihrer Freigabestellung vorgesehen ist, wobei lediglich eine der Arretierpositionen des Schließteils als Komfortposition ausgebildet ist, wobei der Komfortposition eine Anschlagfläche für das Schließteil zugeordnet ist, und wobei der Fanghebel mit der Halteklinke zur Freigabe der Drehfalle erst dann zusammenwirkt, wenn das Schließteil in den Bereich des die Komfortposition bereitstellenden Gabelmaules gelangt.

### Aufgabe

Der Erfindung liegt die Aufgabe zu Grunde, eine Verriegelungsvorrichtung der eingangs genannten Art zu verbessern, insbesondere eine Verriegelungsvorrichtung zur Verriegelung einer schwenkbaren Lehne eines Fahrzeugsitzes mit einer Fahrzeugstruktur in wenigstens zwei unterschiedlichen Neigungseinstellungen zu ermöglichen, sowie einen entsprechenden Fahrzeugsitz bereitzustellen.

### Lösung

Diese Aufgabe wird erfindungsgemäß gelöst durch eine Verriegelungsvorrichtung gemäss Anspruch 1.

Dadurch, dass die Rastklinke wenigstens zwei Aufnahmen aufweist und in der geschlossenen Stellung der Rastklinke ein Verriegelungsglied in wahlweise einer der Aufnahmen aufnehmbar ist, lassen sich mittels der voneinander getrennten Aufnahmen entsprechend zwei unterschiedliche Rastpositionen für das Verriegelungsglied definieren, wobei die Lehne in entsprechend zwei unterschiedlichen Neigungseinstellungen verriegelbar ist.

Dadurch, dass die Rastklinke mittels eines sich an einem Gehäuseteil der Verriegelungsvorrichtung abstützenden Federelements in Richtung der geschlossenen Stellung der Rastklinke vorgespannt ist, ist ein kontrolliertes Überführen des Verriegelungsgliedes aus einer inneren der zwei Aufnahmen in eine äußere Aufnahme der Rastklinke ermöglicht.

Die Rastklinke kann wenigstens teilweise von einer Ummantelung umschlossen sein. Die Ummantelung kann aus Kunststoff gefertigt sein. Die Ummantelung kann einer Geräuschreduktion dienen. Die Ummantelung kann an eine äußere Form und/oder Kontur der Rastklinke angepasst sein. Die Ummantelung kann auf die Rastklinke aufgespritzt sein.

Die erste Aufnahme kann in einer von der zweiten Aufnahme wegweisenden Richtung durch einen Wandabschnitt mit einer Sicherungskontur begrenzt sein. Der Wandabschnitt im Bereich der Sicherungskontur kann im Wesentlichen senkrecht zu einer Bewegungsbahn des Verriegelungsgliedes relativ zur Verriegelungsvorrichtung orientiert sein.

Die erste Aufnahme kann in Richtung der zweiten Aufnahme durch einen Wandabschnitt mit einer Betätigungskontur begrenzt sein. Die Betätigungskontur kann relativ zu einer Bewegungsbahn des Verriegelungsgliedes in einem Winkel, bevorzugt einem schrägen Winkel, insbesondere in einem Winkel im Bereich von 105° bis 125°, angestellt sein. Die Betätigungskontur kann relativ zu einer Bewegungsbahn des Verriegelungsgliedes derart in einem Winkel angestellt sein, dass eine Bewegung des Verriegelungsgliedes entlang seiner Bewegungsbahn bei einem Kontakt mit der Betätigungskontur ein öffnendes Moment auf die Rastklinke ausübt.

Die zweite Aufnahme kann in Richtung der ersten Aufnahme durch einen Wandabschnitt mit einer Sicherungskontur begrenzt sein. Die zweite Aufnahme kann beiderseits durch zwei im Wesentlichen parallel orientiere Wandabschnitte mit jeweils einer Sicherungskontur begrenzt sein. Der Wandabschnitt im Bereich der Sicherungskontur kann im Wesentlichen senkrecht zu einer Bewegungsbahn des Verriegelungsgliedes relativ zur Verriegelungsvorrichtung orientiert sein.

Die Verriegelungsvorrichtung kann eine Steuerklinke aufweisen. Die Steuerklinke kann eine Anlaufkontur aufweisen, welche bei Beaufschlagung durch das Verriegelungsglied den Fangexzenter in dessen Entriegelungsstellung überführt. Die Anlaufkontur kann relativ zu einer Bewegungsbahn des Verriegelungsgliedes in einem Winkel, bevorzugt einem schrägen Winkel, insbesondere in einem Winkel im Bereich von 125° bis 145°, angestellt sein. Die Steuerklinke kann einen Anschlag aufweisen, welcher in der geschlossenen Stellung relativ zur Betätigungskontur der Rastklinke in die erste Aufnahme vorsteht. Die Anlaufkontur kann relativ zu einer Bewegungsbahn des Verriegelungsgliedes derart in einem Winkel angestellt sein, dass eine Bewegung des Verriegelungsgliedes entlang seiner Bewegungsbahn bei einem Kontakt mit der Anlaufkontur ein öffnendes Moment auf die Steuerklinke ausübt.

Eine Steuerkinematik kann vorgesehen sein, welche mit dem Fangexzenter verbunden ist und mit der Steuerklinke koppelbar ist. Die Steuerkinematik kann einen ersten Hebel aufweisen. Ein erstes Ende des ersten Hebels kann drehbar an einem Gehäuseteil der Verriegelungsvorrichtung gelagert sein.

Die Steuerkinematik weist einen zweiten Hebel auf. Ein erstes Ende des zweiten Hebels ist drehbar mit einem zweiten Ende des ersten Hebels verbunden. Ein zweites Ende des zweiten Hebels ist drehbar mit dem Fangexzenter verbunden.

Zur Verbindung des zweiten Hebels mit dem Fangexzenter kann der Fangexzenter einen Bolzen bereitstellen.

Die Steuerkinematik weist einen dritten Hebel auf. Ein erstes Ende des dritten Hebels kann drehbar mit dem ersten Hebel verbunden sein. Das erste Ende des dritten Hebels kann in einem zentralen Abschnitt zwischen dem ersten Ende und dem zweiten Ende des ersten Hebels verbunden sein.

Eine Verbindung des ersten Endes des dritten Hebels mit dem ersten Hebel kann in einem Abschnitt zwischen einer Verbindung des ersten Hebels mit dem zweiten Hebel und einer Verbindung des ersten Hebels mit dem Gehäuseteil der Verriegelungsvorrichtung angeordnet sein.

Der dritte Hebel kann an seinem zweiten Ende eine Gabel aufweisen, welche mit der Steuerklinke in Wirkverbindung bringbar ist. Die Gabel des dritten Hebels kann eine im Wesentlichen halbkreisförmige Öffnung aufweisen, welche insbesondere mit einem Verbindungsstift der Steuerklinke in Wirkverbindung bringbar ist. Die Steuerkinematik kann eine Getriebeübersetzung oder eine Getriebeuntersetzung zwischen der Steuerklinke und dem Fangexzenter umsetzen.

Die Verriegelungsvorrichtung kann einen zwischen einer Sicherungsstellung und einer Freigabestellung schwenkbaren Spannexzenter aufweisen. Der Spannexzenter wirkt in der Sicherungsstellung spielfreistellend auf die Rastklinke in der geschlossenen Stellung.

Unter der "Verriegelungsstellung" des Fangexzenters kann im Sinne dieser Erfindung allgemein eine Stellung, insbesondere eine Winkelstellung, verstanden werden, in welcher der Fangexzenter die Rastklinke in der geschlossenen Stellung vor einem Verdrehen sichert. Unter der "Entriegelungsstellung" des Fangexzenters kann im Sinne dieser Erfindung allgemein eine Stellung, insbesondere eine Winkelstellung, verstanden werden, in welcher der Fangexzenter die Rastklinke für eine Verdrehung derselben freigibt.

Unter der "Sicherungsstellung" des Spannexzenters kann im Sinne dieser Erfindung allgemein eine Stellung, insbesondere eine Winkelstellung, verstanden werden, in welcher der Spannexzenter die Rastklinke in der geschlossenen Stellung spielfrei stellt. Unter der "Freigabestellung" des Spannexzenters kann im Sinne dieser Erfindung allgemein eine Stellung, insbesondere eine Winkelstellung, verstanden werden, in welcher der Spannexzenter die Rastklinke für eine Verdrehung derselben freigibt.

Vorteilhafte Ausgestaltungen, welche einzeln oder in Kombination miteinander eingesetzt werden können, sind Gegenstand der Unteransprüche.

Die Aufgabe wird ferner erfindungsgemäß gelöst durch einen Fahrzeugsitz, insbesondere Kraftfahrzeugsitz, mit einer relativ zu einer Fahrzeugstruktur schwenkbar gelagerten Lehne, wobei der Fahrzeugsitz zur Verriegelung der Lehne mit der Fahrzeugstruktur eine erfindungsgemäße Verriegelungsvorrichtung aufweist.

### Figuren und Ausführungsformen der Erfindung

Im Folgenden ist die Erfindung anhand einer in den Figuren dargestellten bevorzugten Ausführungsform näher erläutert. Die Erfindung ist jedoch nicht auf diese Ausführungsform beschränkt. Es zeigen:
- Fig. 1:: eine schematische Darstellung eines erfindungsgemäßen Fahrzeugsitzes,
- Fig. 2:: eine Explosionsdarstellung einer erfindungsgemäßen Verriegelungsvorrichtung des Fahrzeugsitzes aus Fig. 1,
- Fig. 3:: eine perspektivische Ansicht auf eine erste Seite der Verriegelungsvorrichtung von Fig. 2 in zusammengesetztem Zustand,
- Fig. 4:: eine perspektivische Ansicht auf eine zweite Seite der Verriegelungsvorrichtung von Fig. 2 in zusammengesetztem Zustand,
- Fig. 5:: eine weitere perspektivische Ansicht auf die erste Seite der Verriegelungsvorrichtung von Fig. 2 in zusammengesetztem Zustand,
- Fig. 6:: eine weitere perspektivische Ansicht auf die zweite Seite der Verriegelungsvorrichtung von Fig. 2 in zusammengesetztem Zustand,
- Fig. 7:: eine skizzenhafte Darstellung der Verriegelungsvorrichtung in einem verriegelten Zustand mit geschlossenen Klinken,
- Fig. 8:: eine skizzenhafte Darstellung der Verriegelungsvorrichtung in einem entriegelten Zustand während eines Öffnens durch ein Verriegelungsglied,
- Fig. 9:: eine skizzenhafte Darstellung der Verriegelungsvorrichtung in einem entriegelten Zustand während eines Eintretens des Verriegelungsglieds,
- Fig. 10:: eine skizzenhafte Darstellung der Verriegelungsvorrichtung in einem verriegelten Zustand mit dem Verriegelungsglied in einer ersten Aufnahme,
- Fig. 11:: eine skizzenhafte Darstellung der Verriegelungsvorrichtung in einem entriegelten Zustand mit geschlossenen Klinken,
- Fig. 12:: eine skizzenhafte Darstellung der Verriegelungsvorrichtung in einem entriegelten Zustand vor einem Übergang des Verriegelungsglieds von der ersten Aufnahme in eine zweite Aufnahme,
- Fig. 13:: eine skizzenhafte Darstellung der Verriegelungsvorrichtung in einem entriegelten Zustand während eines Übergangs des Verriegelungsglieds zwischen der ersten und der zweiten Aufnahme, und
- Fig. 14:: eine skizzenhafte Darstellung der Verriegelungsvorrichtung in einem verriegelten Zustand mit dem Verriegelungsglied in der zweiten Aufnahme.

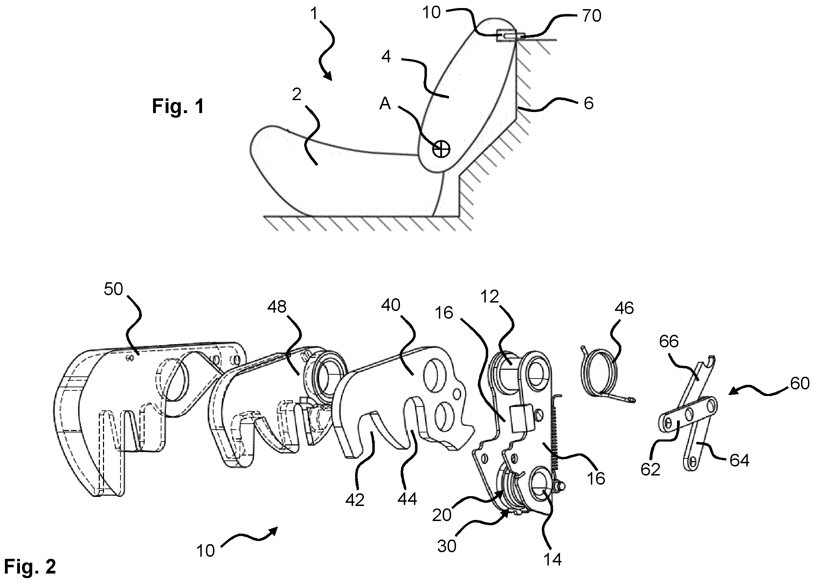

Fig. 1 zeigt einen Fahrzeugsitz 1 mit einem Sitzteil 2 und einer Lehne 4, montiert an einer Fahrzeugstruktur 6. Die Lehne 4 ist um eine Lehnenschwenkachse A relativ zu dem Sitzteil 2 schwenkbar. Dadurch kann die Lehne 4 aus einer zum Personentransport geeigneten Gebrauchsstellung in eine weitgehend horizontale Nichtgebrauchsstellung und zurück geschwenkt werden. Fig. 1 zeigt die Gebrauchsstellung. Zur Sicherung der Lehne 4 in der Gebrauchsstellung gegen ein unbeabsichtigtes Vorschwenken, ist an der Lehne 4 eine Verriegelungsvorrichtung 10 befestigt, die ein fest mit der Fahrzeugstruktur 6 verbundenes und als ein Drahtbügel ausgeführtes Verriegelungsglied 70 aufnehmen und verriegeln kann. Die Anordnung der Verriegelungsvorrichtung 10 und des Verriegelungsglieds 70 können in einer Abwandlung der gezeigten Ausführungsform auch derart vertauscht sein, dass die Verriegelungsvorrichtung 10 fest mit der Fahrzeugstruktur 6 und das Verriegelungsglied 70 fest mit der Lehne 4 verbunden ist.

Die Lehne 4 ist mittels der Verriegelungsvorrichtung 10 wahlweise in einer ersten Neigungseinstellung oder einer definiert von der ersten Neigungseinstellung abweichenden zweiten Neigungseinstellung der Lehne 4 des Fahrzeugsitzes 1 verriegelbar.

Fig. 2 zeigt eine Explosionsdarstellung der erfindungsgemäßen Verriegelungsvorrichtung 10 gemäß einer bevorzugten Ausführungsform. Die Verriegelungsvorrichtung 10 weist zwei gegenüberliegend angeordnete Gehäuseteile 16 auf, welche mittels eines ersten Lagerbolzens 12 und eines beabstandet und parallel zu dem ersten Lagerbolzen 12 angeordneten zweiten Lagerbolzens 14 verbunden sind. Um den zweiten Lagerbolzen 14 sind ein Spannexzenter 20 und ein in axialer Richtung des zweiten Lagerbolzens 14 benachbart zum Spannexzenter 20 angeordneter Fangexzenter 30 jeweils schwenkbar gelagert.

Um den ersten Lagerbolzen 12 sind eine Rastklinke 40, eine die Rastklinke 40 wenigstens teilweise umschließende Ummantelung 48, sowie eine Steuerklinke 50 jeweils schwenkbar gelagert. Die Rastklinke 40 sowie die Ummantelung 48 sind mittels eines sich an einem der Gehäuseteile 16 abstützenden Federelements 46 in Richtung einer geschlossenen Stellung der Rastklinke 40 vorgespannt. Ferner umfasst die Verriegelungsvorrichtung 10 eine Steuerkinematik 60, aufweisend einen ersten Hebel 62, einen zweiten Hebel 64 und einen dritten Hebel 66.

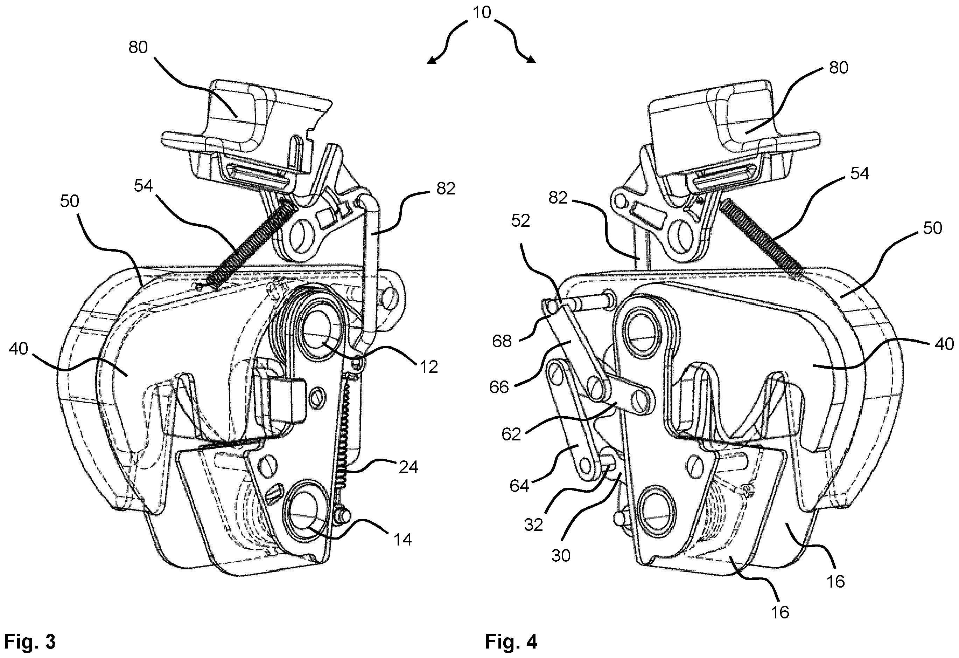

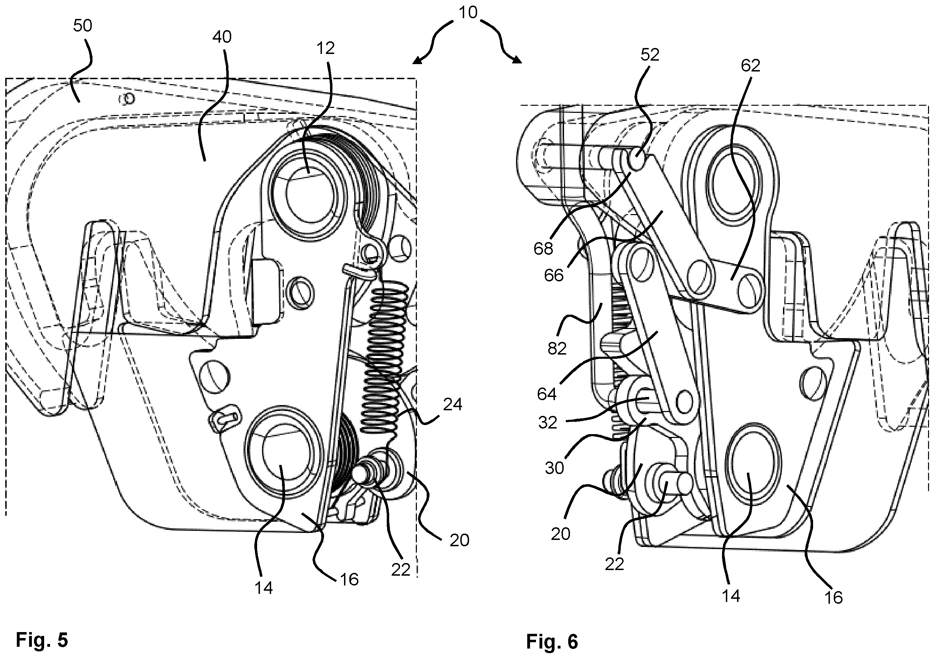

Die Figuren 3 bis 14 werden nachfolgend gemeinsam beschrieben.

Die Rastklinke 40 weist eine erste Aufnahme 42 und eine zweite Aufnahme 44 auf. In der geschlossenen Stellung der Rastklinke 40 ist ein Verriegelungsglied 70 in wahlweise der ersten Aufnahme 42 oder der zweiten Aufnahme 44 aufnehmbar. Die Verriegelungsvorrichtung 10 ist mittels eines Bedienelements 80, vorliegend ein Griff, entriegelbar. Das Bedienelement 80 ist vorliegend mittels einer Verbindungsstange 82 mit dem Fangexzenter 30 verbunden. Zur Verbindung der Verbindungsstange 82 mit dem Fangexzenter 30 kann der Fangexzenter 30 eine Öffnung zur Aufnahme eines Bolzens 32 aufweisen. Der Bolzen 32 kann einteilig mit der Verbindungsstange 82 ausgestaltet sein. Hierdurch ist der Fangexzenter 30 bei Betätigung des Bedienelements 80 von einer Verriegelungsstellung in eine Entriegelungsstellung überführbar.

Der Spannexzenter 20 weist eine exzentrisch zum Lagerbolzen verlaufende Spannfläche zur Spielfreistellung der Rastklinke 40 auf. Der Spannexzenter 20 ist mittels eines an einem der Gehäuseteile 16 angreifenden Federelements 24 in Richtung einer die Rastklinke 40 spielfreistellenden Stellung vorgespannt. Das Federelement 24 ist hierbei mit einem Mitnehmer 22 des Spannexzenters 20 verbunden. Der Mitnehmer 22 dient ferner zur Mitnahme des Spannexzenters 20 durch den Fangexzenter 30 bei der Überführung des Fangexzenters 30 von einer die Rastklinke 40 verriegelnden Stellung in eine die Rastklinke 40 freigebende Stellung. Die die Rastklinke 40 freigebende Stellung des Fangexzenters 30 ist als Entriegelungsstellung bezeichnet. Die die Rastklinke 40 freigebende Stellung des Spannexzenter 20 ist als Freigabestellung bezeichnet. Die die Rastklinke 40 sperrende Stellung des Fangexzenters 30 ist als Verriegelungsstellung bezeichnet. Die die Rastklinke 40 spielfreistellende Stellung des Spannexzenters 20 ist als Sicherungsstellung oder spielfreistellende Sicherungsstellung bezeichnet.

Ein erstes Ende des ersten Hebels 62 der Steuerkinematik 60 ist drehbar an dem Gehäuseteil 16 der Verriegelungsvorrichtung 10 gelagert. Ein erstes Ende des zweiten Hebels 64 ist gelenkig mit einem zweiten Ende des ersten Hebels 62 verbunden. Ein zweites Ende des zweiten Hebels 64 ist gelenkig mit dem Fangexzenter 30 verbunden. Das zweite Ende des zweiten Hebels 64 ist vorliegend mit einem an dem Fangexzenter 30 fixierten Bolzen 32 gelenkig verbunden. Ein erstes Ende des dritten Hebels 66 ist gelenkig mit dem ersten Hebel 62 verbunden. Das erste Ende des dritten Hebels 66 ist in einem zentralen Abschnitt zwischen dem ersten Ende und dem zweiten Ende des ersten Hebels 62 mit diesem verbunden. Die Verbindung des ersten Endes des dritten Hebels 66 mit dem ersten Hebel 62 ist somit in einem Abschnitt zwischen der Verbindung des ersten Hebels 62 mit dem zweiten Hebel 64 und der Verbindung des ersten Hebels 62 mit dem Gehäuseteil 16 der Verriegelungsvorrichtung 10 angeordnet.

Die Steuerkinematik 60, insbesondere ein freies Ende des dritten Hebels 66, ist dazu eingerichtet, mit einem an der Steuerklinke 50 montierten Verbindungsstift 52 zusammenzuwirken. Das freie Ende des dritten Hebels 66 ist in Form einer Gabel 68 ausgestaltet. Die Gabel 68 des dritten Hebels 66 weist eine im Wesentlichen halbkreisförmige Öffnung auf.

Vorliegend ist zwischen dem Bedienelement 80 und der Steuerklinke 50 wirkend eine Zugfeder 54 vorgesehen, wobei bei geschlossener Wirkverbindung zwischen dem dritten Hebel 66 und der Steuerklinke 50 das Bedienelement 80 in Richtung einer Grundstellung vorgespannt ist, und bei geöffneter Wirkverbindung zwischen dem dritten Hebel 66 und der Steuerklinke 50 die Steuerklinke 50 in Richtung einer geöffneten Stellung vorgespannt ist.

Die Steuerkinematik 60 bewirkt ein Verschwenken des Fangexzenters 30 in die die Rastklinke 40 freigebende Stellung aufgrund einer geringen Winkelbewegung der Steuerklinke 50. Eine Winkelbewegung der Steuerklinke 50 von beispielsweise 15° bis 20° bewirkt eine Winkelbewegung des Fangexzenters 30 von beispielsweise ca. 45° bis 50°.

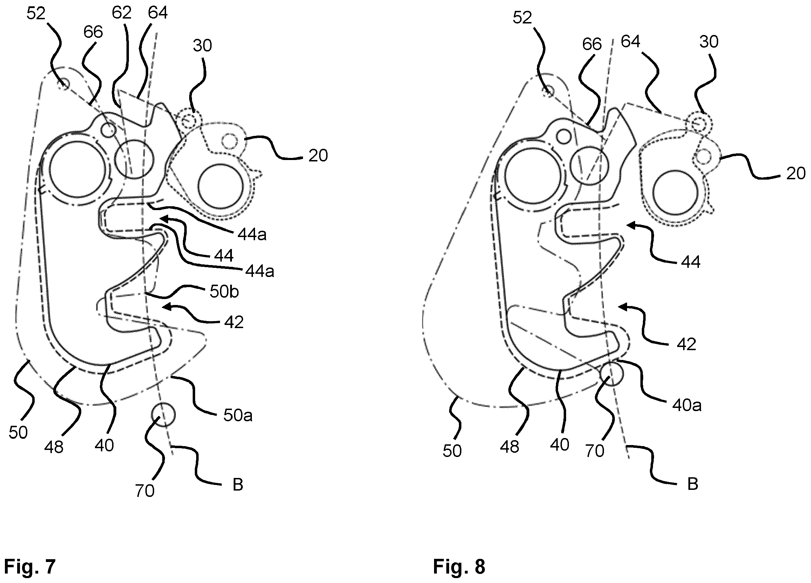

Die Figuren 7 bis 10 zeigen skizzenhafte Darstellungen eines Bewegungsablaufes der Verriegelungsvorrichtung 10, von einem Zustand mit dem Verriegelungsglied 70 außerhalb der Verriegelungsvorrichtung 10, bis in einen Zustand, in dem das Verriegelungsglied 70 in der ersten Aufnahme 42 verriegelt ist.

In Fig. 7 ist zunächst die Verriegelungsvorrichtung 10 mit der Rastklinke 40 und der Steuerklinke 50 in einer geschlossenen Stellung und dem Fangexzenter 30 in der Verriegelungsstellung und dem Spannexzenter 20 in der Sicherungsstellung gezeigt. Das Verriegelungsglied 70 befindet sich außerhalb der Verriegelungsvorrichtung 10 und ist relativ zu der Verriegelungsvorrichtung 10 entlang der gestrichelt eingezeichneten Bewegungsbahn B auf die Verriegelungsvorrichtung 10 zu bewegbar.

Die Steuerklinke 50 weist eine Anlaufkontur 50a auf, welche bei Beaufschlagung durch das Verriegelungsglied 70 ein die Steuerklinke 50 öffnendes Drehmoment erzeugt. Sobald das die Steuerklinke 50 öffnende Drehmoment größer als ein entgegenwirkendes, schließendes Moment des Fangexzenters 30 ist, bewirkt die die Steuerklinke 50 öffnende Winkelbewegung mittels der Steuerkinematik 60 eine Bewegung des Fangexzenters 30 in dessen Entriegelungsstellung. Dieser Zustand ist in Fig. 8 gezeigt. In diesem Zustand werden die Steuerklinke 50 sowie der Fangexzenter 30 und der Spannexzenter 20 von dem Verriegelungsglied 70 offengehalten, wobei die Rastklinke 40 frei verschenken kann.

Das Verriegelungsglied 70 ist in Kontakt mit der Ummantelung 48 der Rastklinke 40. In dem das Verriegelungsglied 70 kontaktierenden Bereich der Ummantelung 48 weist die Rastklinke 40 eine Anlaufkontur 40a auf. In gleicher Wirkweise, wie bei der Anlaufkontur 50a der Steuerklinke 50, wird bei Beaufschlagung der Rastklinke 40 durch das Verriegelungsglied 70 ein die Rastklinke 40 öffnendes Drehmoment erzeugt.

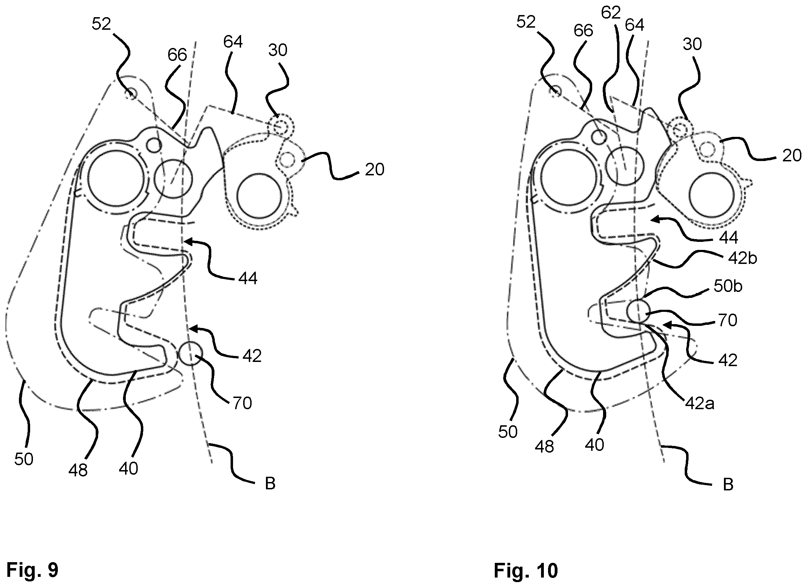

Das Verriegelungsglied 70 kann die Rastklinke 40 nunmehr - wie in Fig. 9 gezeigt - passieren. Erst nachdem das Verriegelungsglied 70 die Rastklinke 40 passiert hat und in einen Bereich der ersten Aufnahme 42 gelangt ist, kann sich der Spannexzenter 20 mittels der Beaufschlagung durch das Federelement 24 in Richtung seiner Sicherungsstellung bewegen und hierbei mittels des Mitnehmers 22 den Fangexzenter 30 in Richtung seiner Verriegelungsstellung bewegen und mittels der Steuerkinematik 60 die Steuerklinke 50 schließen. Aufgrund der Vorspannung des Spannexzenters 20 mittels des Federelements 24 bewirkt ein Kontakt des Spannexzenters 20 mit der Rastklinke 40, insbesondere einer Nase der Rastklinke 40, eine Spielfreistellung der verriegelten Verriegelungsvorrichtung 10.

Die erste Aufnahme 42 ist in einer von der zweiten Aufnahme 44 wegweisenden Richtung durch einen Wandabschnitt mit einer Sicherungskontur 42a begrenzt. Die erste Aufnahme 42 ist ferner in Richtung zu der zweiten Aufnahme 44 durch einen Wandabschnitt mit einer Betätigungskontur 42b begrenzt. Die Steuerklinke 50 weist einen Anschlag 50b auf, welcher in der geschlossenen Stellung relativ zur Betätigungskontur 42b der Rastklinke 40 in die erste Aufnahme 42 vorsteht.

Das Verriegelungsglied 70 in der ersten Aufnahme 42 ist - wie in Fig. 10 gezeigt - zwischen der Sicherungskontur 42a der Rastklinke 40 und dem Anschlag 50b der Steuerklinke 50 verspannt. In diesem Zustand ist das Verriegelungsglied 70 in der ersten Aufnahme 42 verriegelt, was einer ersten definierten Neigungseinstellung der Lehne 4 des Fahrzeugsitzes 1 entspricht.

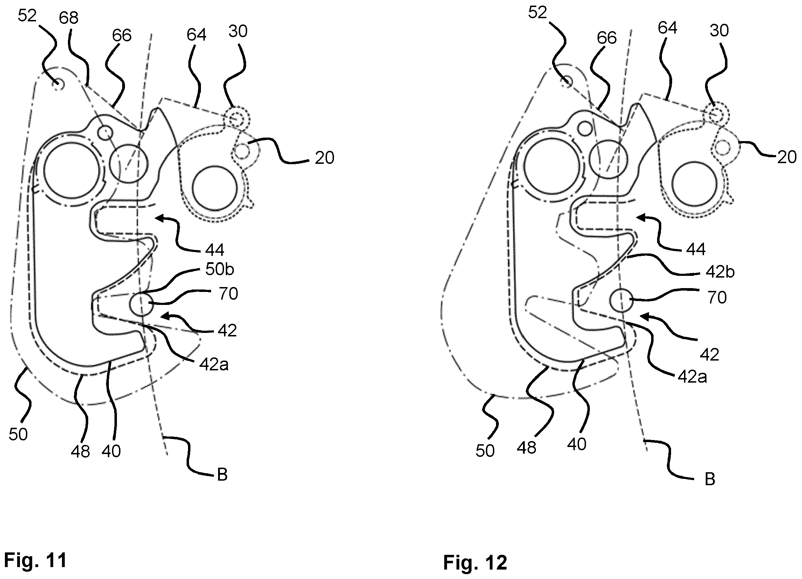

Die Figuren 11 bis 14 zeigen skizzenhafte Darstellungen eines Bewegungsablaufes der Verriegelungsvorrichtung 10 ausgehend von dem in Fig. 10 gezeigten Zustand, bis in einen Zustand, in dem das Verriegelungsglied 70 in der zweiten Aufnahme 42 verriegelt ist.

Um das Verriegelungsglied 70 von der ersten Aufnahme 42 in die zweite Aufnahme 44 zu überführen, ist es vorgesehen, dass die verriegelte Verriegelungsvorrichtung 10 zunächst mittels des Bedienelements 80 manuell entriegelbar ist. Die manuelle Betätigung des Bedienelements 80 ist mittels der Verbindungsstange 82 an den Fangexzenter 30 gekoppelt. Der Fangexzenter 30 ist hierdurch in seine Entriegelungsstellung bewegbar, wobei der Fangexzenter 30 mittels des Mitnehmers 22 den Spannexzenter 20 in dessen Freigabestellung mitnimmt. Hierbei ist ferner die Steuerkinematik 60 von dem Fangexzenter 30 über den zweiten Hebel 64 derart gesteuert, dass die Gabel 68 des dritten Hebels 66 außer Kontakt mit dem Verbindungstift 52 der Steuerklinke 50 gelangt. Dieser Zustand mit der manuell entriegelten Rastklinke 40 ist in Fig. 11 gezeigt.

Bei der durch die manuelle Entriegelung der Verriegelungsvorrichtung 10 bewirkten Aufhebung der Wirkverbindung zwischen dem dritten Hebel 66 und der Steuerklinke 50, ist die Steuerklinke 50 mittels der zwischen dem Bedienelement 80 und der Steuerklinke 50 gespannten Zugfeder 54 in Richtung einer geöffneten Stellung mit einer Federkraft beaufschlagt. Hierdurch öffnet sich die Steuerklinke 50 selbstständig, sobald das Verriegelungsglied 70 einen hierzu benötigten Verfahrweg, insbesondere im Bereich des Anschlags 50b, freigibt. Fig. 12 zeigt diesen Zustand der Verriegelungsvorrichtung 10 mit geöffneter Steuerklinke 50 und geschlossener Rastklinke 40. Durch das Aufschwenken der Steuerklinke 50 wird ein Kontakt zwischen der Steuerklinke 50 und der Steuerkinematik 60 wiederhergestellt.

Die Lehne 40 kann nun soweit verschwenkt werden, als dass das Verriegelungsglied 70 entlang seiner Bewegungsbahn B innerhalb der ersten Aufnahme 42 der Rastklinke 40 in Richtung der zweiten Aufnahme 44 bewegbar ist.

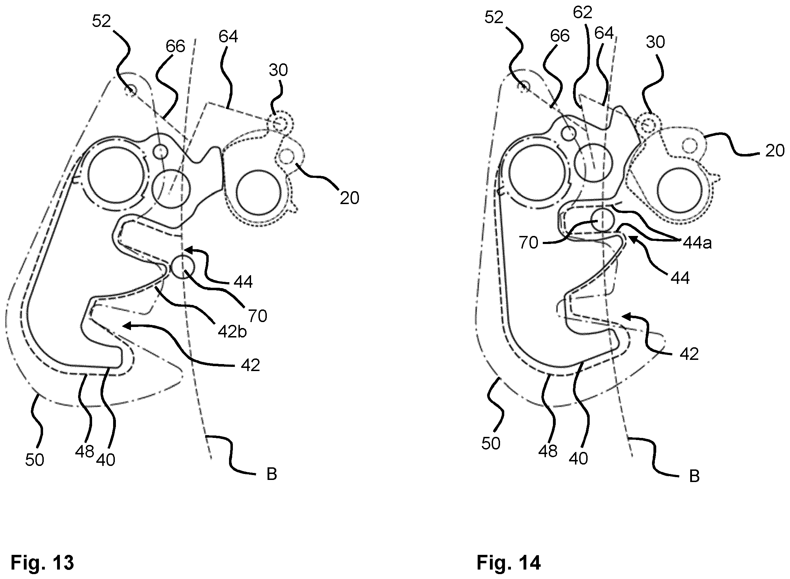

Die Betätigungskontur 42b der Rastklinke 40 erzeugt bei Beaufschlagung durch das Verriegelungsglied 70 ein die Rastklinke 40 öffnendes Drehmoment. Sobald das die Rastklinke 40 öffnende Drehmoment größer als ein mittels des Federelements 46 erzeugtes entgegenwirkendes schließendes Moment ist, bewegt sich die Rastklinke 40 in deren geöffnete Stellung. Ist die Rastklinke 40 geöffnet, ist der Weg für das Verriegelungsglied 70 in die zweite Aufnahme 44 freigegeben. Dieser Zustand ist in Fig. 13 gezeigt. In diesem Zustand werden die Steuerklinke 50 sowie der Fangexzenter 30 und der Spannexzenter 20 von dem Verriegelungsglied 70 offengehalten, wobei eine manuelle Betätigung mittels des Bedienelements 80 nicht länger erforderlich ist.

Erst nachdem das Verriegelungsglied 70 die Rastklinke 40 weiter passiert hat und in einen Bereich der zweiten Aufnahme 44 gelangt ist, schließt sich die Rastklinke 40 aufgrund der Federkraft des Federelements 46 wieder. Anschließend kann sich der Spannexzenter 20 mittels der Beaufschlagung durch das Federelement 24 in Richtung seiner Sicherungsstellung bewegen und hierbei mittels des Mitnehmers 22 den Fangexzenter 30 in Richtung seiner Verriegelungsstellung bewegen und mittels der Steuerkinematik 60 die Steuerklinke 50 schließen.

Die zweite Aufnahme 44 ist durch zwei im Wesentlichen parallel orientiere Wandabschnitte mit jeweils einer Sicherungskontur 44a begrenzt. Das Verriegelungsglied 70 in der zweiten Aufnahme 44, ist - wie in Fig. 14 gezeigt - zwischen den Sicherungskonturen 44a der Rastklinke 40, bzw. der Ummantelung 48, verspannt. In diesem Zustand ist das Verriegelungsglied 70 in der zweiten Aufnahme 44 verriegelt, was einer zweiten definierten Neigungseinstellung der Lehne 4 des Fahrzeugsitzes 1 entspricht.

Ein Übergang des Verriegelungsglieds 70 aus der zweiten Aufnahme 44 zurück in die erste Aufnahme 42 der Rastklinke 40 erfolgt abermals durch manuelle Betätigung des Bedienelements 80. Die manuelle Betätigung des Bedienelements 80 ist mittels der Verbindungsstange 82 an den Fangexzenter 30 gekoppelt. Der Fangexzenter 30 ist hierdurch in seine Entriegelungsstellung bewegbar, wobei der Fangexzenter 30 mittels des Mitnehmers 22 den Spannexzenter 20 in dessen Freigabestellung mitnimmt. Hierbei ist ferner die Steuerkinematik 60 von dem Fangexzenter 30 über den zweiten Hebel 64 derart gesteuert, dass die Gabel 68 des dritten Hebels 66 außer Kontakt mit dem Verbindungstift 52 der Steuerklinke 50 gelangt.

Bei der durch die manuelle Entriegelung der Verriegelungsvorrichtung 10 bewirkten Aufhebung der Wirkverbindung zwischen dem dritten Hebel 66 und der Steuerklinke 50, ist die Steuerklinke 50 mittels der zwischen dem Bedienelement 80 und der Steuerklinke 50 gespannten Zugfeder 54 in Richtung einer geöffneten Stellung mit einer Federkraft beaufschlagt. Hierdurch öffnet sich die Steuerklinke 50 selbstständig. Durch das Aufschwenken der Steuerklinke 50 wird ein Kontakt zwischen der Steuerklinke 50 und der Steuerkinematik 60 wiederhergestellt.

Die Sicherungskontur 44a der zweiten Aufnahme 44 der Rastklinke 40 erzeugt bei Beaufschlagung durch das Verriegelungsglied 70 ein die Rastklinke 40 öffnendes Drehmoment. Sobald das erzeugte die Rastklinke 40 öffnende Drehmoment größer als ein mittels des Federelements 46 erzeugtes entgegenwirkendes schließendes Drehmoment ist, bewegt sich die Rastklinke 40 in deren geöffnete Stellung. In seiner Bewegung entlang der Bewegungsbahn B schiebt das Verriegelungsglied 70 somit die Rastklinke 40 zur Seite, bis das Verriegelungsglied 70 die Rastklinke 40 teilweise passiert hat.

Nachdem das Verriegelungsglied 70 die Rastklinke 40 teilweise passiert hat und in einen Bereich der ersten Aufnahme 42 gelangt ist, schließt sich die Rastklinke 40 aufgrund der Federkraft des Federelements 46 wieder. Anschließend kann sich der Spannexzenter 20 mittels der Beaufschlagung durch das Federelement 24 in Richtung seiner Sicherungsstellung bewegen und hierbei mittels des Mitnehmers 22 den Fangexzenter 30 in Richtung seiner Verriegelungsstellung bewegen und mittels der Steuerkinematik 60 auch die Steuerklinke 50 schließen. Das Verriegelungsglied 70 befindet sich nunmehr wieder in der verriegelten ersten Aufnahme 42, entsprechend der ersten definierten Neigungsstellung der Lehne 4.

Ein Austreten des Verriegelungsglieds 70 aus der Verriegelungsvorrichtung 10 erfolgt in analoger Weise wie zuvor hinsichtlich des Übergangs des Verriegelungsglieds 70 aus der zweiten Aufnahme 44 zurück in die erste Aufnahme 42 beschrieben.

Obwohl die Erfindung in den Zeichnungen und der vorausgegangenen Darstellung im Detail beschrieben wurde, sind die Darstellungen illustrativ und beispielhaft und nicht einschränkend zu verstehen. Insbesondere ist die Wahl der zeichnerisch dargestellten Proportionen der einzelnen Elemente nicht als erforderlich oder beschränkend auszulegen. Weiterhin ist die Erfindung insbesondere nicht auf die erläuterte bevorzugte Ausführungsform beschränkt. Weitere Varianten der Erfindung und ihre Ausführung innerhalb des Schutzbegehrens der Ansprüche ergeben sich für den Fachmann aus der vorangegangenen

Offenbarung, den Figuren und den Ansprüchen.

In den Ansprüchen verwendete Begriffe wie "umfassen", "aufweisen", "beinhalten", "enthalten" und dergleichen schließen weitere Elemente oder Schritte nicht aus. Die Verwendung des unbestimmten Artikels schließt eine Mehrzahl nicht aus. Eine einzelne Einrichtung kann die Funktionen mehrerer in den Ansprüchen genannten Einheiten bzw. Einrichtungen ausführen, solange dies innerhalb des Schutzbegehrens der Ansprüche liegt.

### Bezugszeichenliste

- 1: Fahrzeugsitz
- 2: Sitzteil
- 4: Lehne
- 6: Fahrzeugstruktur
- 10: Verriegelungsvorrichtung
- 12: erster Lagerbolzen
- 14: zweiter Lagerbolzen
- 16: Gehäuseteil
- 20: Spannexzenter
- 22: Mitnehmer
- 24: Federelement
- 30: Fangexzenter
- 32: Bolzen
- 40: Rastklinke
- 40a: Anlaufkontur
- 42: erste Aufnahme
- 42a: Sicherungskontur
- 42b: Betätigungskontur
- 44: zweite Aufnahme
- 44a: Sicherungskontur
- 46: Federelement
- 48: Ummantelung
- 50: Steuerklinke
- 50a: Anlaufkontur
- 50b: Anschlag
- 52: Verbindungsstift
- 54: Zugfeder
- 60: Steuerkinematik
- 62: erster Hebel
- 64: zweiter Hebel
- 66: dritter Hebel
- 68: Gabel
- 70: Verriegelungsglied
- 80: Bedienelement
- 82: Verbindungsstange
- A: Lehnenschwenkachse
- B: Bewegungsbahn

## Patentansprüche

1. Verriegelungsvorrichtung (10), insbesondere zur Verriegelung einer schwenkbaren Lehne (4) eines Fahrzeugsitzes (1) mit einer Fahrzeugstruktur (6), mit einem mittels eines Bedienelements (80) zwischen einer Verriegelungsstellung und einer Entriegelungsstellung schwenkbaren Fangexzenter (30) und mit einer zwischen einer geöffneten Stellung und einer geschlossenen Stellung schwenkbaren Rastklinke (40), wobei die Rastklinke (40) in deren geschlossener Stellung durch den Fangexzenter (30) in dessen Verriegelungsstellung gesperrt ist, wobei die Rastklinke (40) wenigstens zwei Aufnahmen (42, 44) aufweist und in der geschlossenen Stellung der Rastklinke (40) ein Verriegelungsglied (70) in wahlweise einer der Aufnahmen (42, 44) aufnehmbar ist,
**dadurch gekennzeichnet, dass**
die Rastklinke (40) mittels eines sich an einem Gehäuseteil (16) der Verriegelungsvorrichtung (10) abstützenden Federelements (46) in Richtung der geschlossenen Stellung der Rastklinke (40) vorgespannt ist, wobei eine Steuerkinematik (60) mit einem ersten Hebel (62), einem zweiten Hebel (64) und einem dritten Hebel (66) vorgesehen ist, wobei ein erstes Ende des zweiten Hebels (64) gelenkig mit einem zweiten Ende des ersten Hebels (62) verbunden ist und ein zweites Ende des zweiten Hebels (64) gelenkig mit dem Fangexzenter (30) verbunden ist.

2. Verriegelungsvorrichtung (10) gemäß Anspruch 1, wobei die erste Aufnahme (42) in einer von der zweiten Aufnahme (44) wegweisenden Richtung durch einen Wandabschnitt mit einer Sicherungskontur (42a) begrenzt ist.

3. Verriegelungsvorrichtung (10) gemäß einem der Ansprüche 1 oder 2, wobei die erste Aufnahme (42) in Richtung der zweiten Aufnahme (44) durch einen Wandabschnitt mit einer Betätigungskontur (42b) begrenzt ist.

4. Verriegelungsvorrichtung (10) gemäß einem der Ansprüche 1 bis 3, wobei die zweite Aufnahme (44) durch zwei im Wesentlichen parallel orientiere Wandabschnitte mit jeweils einer Sicherungskontur (44a) begrenzt ist.

5. Verriegelungsvorrichtung (10) gemäß einem der Ansprüche 1 bis 4, wobei die Verriegelungsvorrichtung (10) eine Steuerklinke (50) aufweist.

6. Verriegelungsvorrichtung (10) gemäß Anspruch 5, wobei die Steuerklinke (50) eine Anlaufkontur (50a) aufweist, welche bei Beaufschlagung durch das Verriegelungsglied (70) den Fangexzenter (30) in dessen Entriegelungsstellung überführt.

7. Verriegelungsvorrichtung (10) gemäß einem der Ansprüche 5 oder 6, wobei die Steuerklinke (50) einen Anschlag (50b) aufweist, welcher in einer geschlossenen Stellung der Steuerklinke (50) über die Betätigungskontur (42b) der Rastklinke (40) in die erste Aufnahme (42) vorsteht.

8. Verriegelungsvorrichtung (10) gemäß einem der Ansprüche 5 bis 7, wobei die Steuerkinematik (60) mit der Steuerklinke (50) koppelbar ist.

9. Verriegelungsvorrichtung (10) gemäß einem der Ansprüche 1 bis 8, wobei ein erstes Ende des dritten Hebels (66) gelenkig mit dem ersten Hebel (62), insbesondere in einem zentralen Abschnitt zwischen dem ersten Ende des ersten Hebels (62) und einem zweiten Ende des ersten Hebels (62), verbunden ist.

10. Verriegelungsvorrichtung (10) gemäß einem der Ansprüche 5 bis 9, wobei eine zwischen einem Bedienelement (80) und der Steuerklinke (50) wirkende Zugfeder (54) vorgesehen ist.

11. Verriegelungsvorrichtung (10) gemäß Anspruch 10, wobei bei Wirkverbindung zwischen dem dritten Hebel (66) und der Steuerklinke (50) das Bedienelement (80) mittels der Zugfeder (54) in Richtung einer Grundstellung vorgespannt ist, und bei aufgehobener Wirkverbindung zwischen dem dritten Hebel (66) und der Steuerklinke (50) die Steuerklinke (50) mittels der Zugfeder (54) in Richtung einer geöffneten Stellung vorgespannt ist.

12. Verriegelungsvorrichtung (10) gemäß einem der Ansprüche 1 bis 11, wobei die Verriegelungsvorrichtung (10) einen zwischen einer Sicherungsstellung und einer Freigabestellung schwenkbaren Spannexzenter (20), insbesondere zur Spielfreistellung der Rastklinke (40), aufweist.

13. Fahrzeugsitz (1), insbesondere Kraftfahrzeugsitz, mit einer relativ zu einer Fahrzeugstruktur (6) schwenkbar gelagerten Lehne (4), wobei der Fahrzeugsitz (1) zur Verriegelung der Lehne (4) mit der Fahrzeugstruktur (6) eine Verriegelungsvorrichtung (10) gemäß einem der vorstehenden Ansprüche aufweist.

## Claims

1. Locking device (10), in particular for locking a pivotable backrest (4) of a vehicle seat (1) to a vehicle structure (6), comprising a catching eccentric (30) which can be pivoted between a locking position and a release position by means of an operating element (80), and comprising a latching pawl (40) which can be pivoted between an open position and a closed position, wherein the latching pawl (40) is blocked in the closed position thereof by the catching eccentric (30) in the locking position thereof, wherein the latching pawl (40) has at least two receptacles (42, 44) and, in the closed position of the latching pawl (40), a locking element (70) can be received in either one of the receptacles (42, 44),
**characterized in that**
the latching pawl (40) is preloaded towards the closed position of the latching pawl (40) by means of a spring element (46) which is supported on a housing part (16) of the locking device (10), wherein a control kinematics system (60) having a first lever (62), a second lever (64) and a third lever (66) is provided, wherein a first end of the second lever (64) is connected in an articulated manner to a second end of the first lever (62) and a second end of the second lever (64) is connected in an articulated manner to the catching eccentric (30).

2. Locking device (10) according to Claim 1, wherein the first receptacle (42) is defined in a direction facing away from the second receptacle (44) by a wall portion with a securing contour (42a).

3. Locking device (10) according to either of Claims 1 and 2, wherein the first receptacle (42) is defined towards the second receptacle (44) by a wall portion with an actuating contour (42b).

4. Locking device (10) according to one of Claims 1 to 3, wherein the second receptacle (44) is defined by two wall portions oriented substantially in parallel, with in each case a securing contour (44a).

5. Locking device (10) according to one of Claims 1 to 4, wherein the locking device (10) has a control pawl (50) .

6. Locking device (10) according to Claim 5, wherein the control pawl (50) has a lead-in contour (50a) which, when acted upon by the locking element (70), transfers the catching eccentric (30) into the release position thereof.

7. Locking device (10) according to either of Claims 5 and 6, wherein the control pawl (50) has a stop (50b) which, in a closed position of the control pawl (50), protrudes into the first receptacle (42) over the actuating contour (42b) of the latching pawl (40).

8. Locking device (10) according to one of Claims 5 to 7, wherein the control kinematics system (60) can be coupled to the control pawl (50).

9. Locking device (10) according to one of Claims 1 to 8, wherein a first end of the third lever (66) is connected in an articulated manner to the first lever (62), in particular in a central section between the first end of the first lever (62) and a second end of the first lever (62).

10. Locking device (10) according to one of Claims 5 to 9, wherein a tension spring (54) acting between an operating element (80) and the control pawl (50) is provided.

11. Locking device (10) according to Claim 10, wherein in the case of an operative connection between the third lever (66) and the control pawl (50), the operating element (80) is preloaded by means of the tension spring (54) towards a basic position, and in the case of the operative connection between the third lever (66) and the control pawl (50) being cancelled, the control pawl (50) is preloaded by means of the tension spring (54) towards an open position.

12. Locking device (10) according to one of Claims 1 to 11, wherein the locking device (10) has a clamping eccentric (20) which can be pivoted between a securing position and an unblocked position, in particular for eliminating play from the latching pawl (40).

13. Vehicle seat (1), in particular a motor vehicle seat, comprising a backrest (4) which is mounted so as to be pivotable relative to a vehicle structure (6), wherein the vehicle seat (1) has a locking device (10) according to one of the preceding claims for locking the backrest (4) to the vehicle structure (6).

## Revendications

1. Dispositif de verrouillage (10), en particulier pour le verrouillage d'un dossier pivotant (4) d'un siège de véhicule (1) comprenant une structure de véhicule (6), incluant un excentrique d'accrochage (30) apte à pivoter au moyen d'un élément de commande (80) entre une position de verrouillage et une position de déverrouillage et avec un cliquet d'arrêt (40) apte à pivoter entre une position d'ouverture et une position de fermeture, le cliquet d'arrêt (40) étant bloqué dans sa position de fermeture par l'excentrique d'accrochage (30) dans sa position de verrouillage, le cliquet d'arrêt (40) présentant au moins deux logements (42, 44) et, dans la position de fermeture du cliquet d'arrêt (40), un élément de verrouillage (70) étant apte à être sélectivement reçu dans l'un des logements (42, 44),
**caractérisé en ce que**
le cliquet d'arrêt (40) est précontraint en direction de la position de fermeture du cliquet d'arrêt (40) au moyen d'un élément à ressort (46) s'appuyant sur une partie de boîtier (16) du dispositif de verrouillage (10), une cinématique de commande (60) comprenant un premier levier (62), un deuxième levier (64) et un troisième levier (66) étant prévue, une première extrémité du deuxième levier (64) étant reliée de manière articulée à une deuxième extrémité du premier levier (62) et une deuxième extrémité du deuxième levier (64) étant reliée de manière articulée à l'excentrique d'accrochage (30).

2. Dispositif de verrouillage (10) selon la revendication 1, dans lequel le premier logement (42) est délimité, dans une direction opposée au deuxième logement (44), par une partie de paroi présentant un contour de sécurité (42a).

3. Dispositif de verrouillage (10) selon l'une des revendications 1 ou 2, dans lequel le premier logement (42) est délimité, en direction du deuxième logement (44), par une portion de paroi présentant un contour d'actionnement (42b).

4. Dispositif de verrouillage (10) selon l'une des revendications 1 à 3, dans lequel le deuxième logement (44) est délimité par deux portions de paroi orientées sensiblement parallèlement et comportant chacune un contour de sécurité (44a).

5. Dispositif de verrouillage (10) selon l'une des revendications 1 à 4, dans lequel le dispositif de verrouillage (10) comprend un cliquet de commande (50).

6. Dispositif de verrouillage (10) selon la revendication 5, dans lequel le cliquet de commande (50) présente un contour de contact (50a) qui, lorsqu'il est sollicité par l'organe de verrouillage (70), fait passer l'excentrique d'accrochage (30) dans sa position de déverrouillage.

7. Dispositif de verrouillage (10) selon l'une des revendications 5 ou 6, dans lequel le cliquet de commande (50) comporte une butée (50b) qui, dans une position de fermeture du cliquet de commande (50), fait saillie au-delà du contour d'actionnement (42b) du cliquet d'arrêt (40) dans le premier logement (42).

8. Dispositif de verrouillage (10) selon l'une des revendications 5 à 7, dans lequel la cinématique de commande (60) est apte à être reliée au cliquet de commande (50).

9. Dispositif de verrouillage (10) selon l'une des revendications 1 à 8, dans lequel une première extrémité du troisième levier (66) est articulée sur le premier levier (62), notamment dans une portion centrale entre la première extrémité du premier levier (62) et une deuxième extrémité du premier levier (62).

10. Dispositif de verrouillage (10) selon l'une des revendications 5 à 9, dans lequel il est prévu un ressort de traction (54) agissant entre un élément de commande (80) et le cliquet de commande (50).

11. Dispositif de verrouillage (10) selon la revendication 10, dans lequel, en cas de liaison active entre le troisième levier (66) et le cliquet de commande (50), l'élément de commande (80) est précontraint au moyen du ressort de traction (54) en direction d'une position initiale, et, en cas de liaison active supprimée entre le troisième levier (66) et le cliquet de commande (50), le cliquet de commande (50) est précontraint au moyen du ressort de traction (54) en direction d'une position d'ouverture.

12. Dispositif de verrouillage (10) selon l'une des revendications 1 à 11, le dispositif de verrouillage (10) comportant un excentrique de serrage (20) apte à pivoter entre une position de sécurité et une position de libération, notamment pour libérer le jeu du cliquet d'arrêt (40).

13. Siège de véhicule (1), notamment siège de véhicule automobile, comportant un dossier (4) monté pivotant par rapport à une structure de véhicule (6), le siège de véhicule (1) comportant, pour le verrouillage du dossier (4) sur la structure de véhicule (6), un dispositif de verrouillage (10) selon l'une des revendications précédentes.
